# EUROPÄISCHE PATENTSCHRIFT

(11) **EP 3 394 329 B1**
(45) Veröffentlichungstag und Bekanntmachung des Hinweises auf die Patenterteilung: **05.05.2021**
(21) Anmeldenummer: 16829242.3
(22) Anmeldetag: 22.12.2016
(51) Int. Cl.: D01D 5/00, D01D 10/00, D01F 1/10, D01D 10/02, C04B 35/622

(54) **VERFAHREN ZUR HERSTELLUNG VON LEITFÄHIGEN STRUKTUREN**
METHOD FOR THE PRODUCTION OF CONDUCTIVE STRUCTURES
PROCÉDÉ DE FABRICATION DE STRUCTURES CONDUCTRICES

(30) Priorität: 23.12.2015 DE 102015122788
(43) Veröffentlichungstag der Anmeldung: 31.10.2018
(73) Patentinhaber: Leibniz-Institut für Neue Materialien gemeinnützige GmbH, 66123 Saarbrücken (DE)
(72) Erfinder: OLIVEIRA, Peter William de, 66123 Saarbrücken (DE); ATCHISON, Jennifer S., Woodlyn, PA 19094 (US)
(74) Vertreter: Patentanwälte Gierlich & Pischitzis Partnerschaft mbB
(86) Internationale Anmeldenummer: PCT/EP2016/082480
(87) Internationale Veröffentlichungsnummer: WO 2017/109131

(56) Entgegenhaltungen:
- WO-A1-2009/120151
- DAN LI ET AL: "Photocatalytic deposition of gold nanoparticles on electrospun nanofibers of titania", CHEMICAL PHYSICS LETTERS, Bd. 394, Nr. 4-6, 29. Juli 2004 (2004-07-29), Seiten 387-391, XP055014340, NL ISSN: 0009-2614, DOI: 10.1016/j.cplett.2004.07.044
- S Aryal ET AL: "Deposition of gold nanoparticles on electrospun MgTiO3 ceramic nanofibers", Journal of Nanoscience and Nanotechnology, 1. Februar 2006 (2006-02-01), Seiten 510-513, XP8115245, Gefunden im Internet: URL:http://www.ncbi.nlm.nih.gov/pubmed/165 73053 [gefunden am 2017-03-23]
- QI LONG ET AL: "Improving the electrical catalytic activity of Pt/TiO2 nanocomposites by a combination of electrospinning and microwave irradiation", JOURNAL OF NANOPARTICLE RESEARCH, Bd. 13, Nr. 4, 14. April 2010 (2010-04-14) , Seiten 1655-1662, XP055358127, NL ISSN: 1388-0764, DOI: 10.1007/s11051-010-9919-0
- WEI ZHANG ET AL: "Anatase Mesoporous TiO2 Nanofibers with High Surface Area for Solid-State Dye-Sensitized Solar Cells", SMALL, Bd. 6, Nr. 19, 4. Oktober 2010 (2010-10-04), Seiten 2176-2182, XP055359529, DE ISSN: 1613-6810, DOI: 10.1002/smll.201000759
- KUNAL MONDAL ET AL: "Highly Sensitive Biofunctionalized Mesoporous Electrospun TiO 2 Nanofiber Based Interface for Biosensing", ACS APPLIED MATERIALS AND INTERFACES, Bd. 6, Nr. 4, 21. Januar 2014 (2014-01-21) , Seiten 2516-2527, XP055359518, US ISSN: 1944-8244, DOI: 10.1021/am404931f

## Beschreibung

### Gebiet der Erfindung

Die Erfindung betrifft ein Verfahren zur Herstellung von metallischen, insbesondere leitfähigen Strukturen, sowie solche Substrate und ihre Verwendung.

### Stand der Technik

Fasern, welche durch Elektrospinnen erhalten werden, weisen ein sehr hohes Aspektverhältnis auf. Dies ist vorteilhaft für Anwendungen, welche eine große Oberfläche bei kleinem Volumen benötigen. So wurden mit Silbernanopartikeln beschichtete TiO₂-Nanofasern für Surface Enhanced Raman Spektroskopie, antibakterielle Beschichtungen, Photokatalyse und Energieumwandlung verwendet. Leitfähige Nanofasern wurden auch als Elektroden oder für Touchscreens vorgeschlagen.

Die bekannten Verfahren sind dabei häufig sehr aufwendig und erlauben keine gute Strukturierung der erhaltenen Beschichtung. Dan Li et al. Chemical Physics Letters 2004, 394(4-6), 387-391, "Photocatalytic deposition of gold nanoparticles on electrospun nanofibers of titania" beschreibt die photokatalytische Abscheidung von Goldnanopartikeln an Titandioxidfasern. Diese werden durch Kalzinierung bei 500 °C hergestellt. Zur Beeinflussung der Form der Nanopartikel werden unterschiedliche Additive verwendet. Die hergestellten Fasern sollen als Sensoren oder zur Katalyse eingesetzt werden.

S. Aryal et al. Journal of Nanoscience and Nanotechnology 2006, 6, 510-513. "Deposition of gold nanoparticles on electrospun MgTiO3 ceramic nanofibers" beschreibt MgTiO₃-Fasern, auf denen Goldnanopartikel abgeschieden werden. Die Fasern werden bei 650 °C kalziniert.

Qi Long et al. Journal of Nanoparticle Research 2011, 13(4), 1655-1662. "Improving the electrical catalytic activity of Pt/TiO2 nanocomposites by a combination of electrospinning and microwave irradiation" beschreibt die Abscheidung von Pt-Partikeln auf Titandioxidfasern. Die Fasern werden bei 500 °C kalziniert. Die Abscheidung der Partikel wird durch Mikrowellenbestrahlung herbeigeführt.

### Aufgabe

Aufgabe der Erfindung ist es, ein Verfahren anzugeben, das die Herstellung von metallischen Strukturen auf der Basis von Nanofasern erlaubt, insbesondere von transparenten leitfähigen Strukturen.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch ein Verfahren zur Herstellung von metallischen Strukturen gelöst. Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen. Das Verfahren umfasst folgende Schritte:
a) Bereitstellung einer Spinnzusammensetzung umfassend mindestens eine hydrolysierbare Titanverbindung oder ein Kondensat davon, und mindestens ein organisches Polymer und/oder Oligomer;
b) Elektrospinnen der Zusammensetzung auf ein Substrat;
c) Temperaturbehandlung der erhaltenen Nanofasern bei über 430 °C und unter 470 °C, um photokatalytisch aktive Nanofasern umfassend Anatas und amorphes Titandioxid zu erhalten;
d) Kontaktierung mindestens einer Vorläuferverbindung für eine metallische Struktur mit den Nanofasern;
e) Reduktion der mindestens einen Vorläuferverbindung zur metallischen Struktur durch Einwirkung von elektromagnetischer Strahlung auf die Nanofasern.

In Schritt e) bildet sich üblicherweise eine Metallschicht. Hierbei wird unter einer metallischen Schicht im Sinne der Erfindung eine Schicht aus einem Metall verstanden. Solche Schichten können bei ausreichender Dicke auch leitfähig sein. Solche leitfähigen Schichten sind besonders bevorzugt. Dabei wird unter leitfähig nicht unbedingt die Herstellung von Strukturen verstanden, welche für sich eine Leiterbahn darstellen. Auch die Herstellung von Punkten aus leitfähigem Material stellt eine im Prinzip leitfähige Struktur dar.

Durch die Verwendung von Nanofasern kann erreicht werden, dass sich die metallische Schicht entlang der Nanofasern ausbildet und somit dünnere leitfähige Strukturen möglich sind. Durch die photokatalytische Aktivität der Nanofasern kann erreicht werden, dass die Reduktion selektiv an den Nanofasern erfolgt. Da die Vorläuferverbindung selbst nicht, bzw. nur in geringem Maß, lichtempfindlich ist, kann sie deutlich einfacher gehandhabt werden.

Das Substrat auf dem die Nanofasern bereitgestellt werden, kann jedes für diesen Zweck geeignete Material sein. Beispiele für geeignete Materialien sind Metalle oder Metalllegierungen, Glas, Keramik, einschließlich Oxidkeramik, Glaskeramik oder Kunststoffe, sowie Papier und andere zellulosehaltige Materialien. Selbstverständlich sind auch Substrate verwendbar, die eine Oberflächenschicht aus den vorstehend genannten Materialien aufweisen. Bei der Oberflächenschicht kann es sich z.B. um eine Metallisierung, eine Emaillierung, eine Glas- oder Keramikschicht oder eine Lackierung handeln.

Beispiele für Metalle oder Metalllegierungen sind Stahl, einschließlich Edelstahl, Chrom, Kupfer, Titan, Zinn, Zink, Messing und Aluminium. Beispiele für Glas sind Natronkalkglas, Borosilikatglas, Bleikristall und Kieselglas. Es kann sich z.B. um Flachglas, Hohlglas wie Behälterglas, oder um Laborgeräteglas handeln. Bei der Keramik handelt es sich z.B. um eine Keramik auf Basis der Oxide SiO₂, Al₂O₃, ZrO₂ oder MgO oder der entsprechenden Mischoxide. Beispiele für den Kunststoff, der, wie auch das Metall, als Folie vorliegen kann, sind Polyethylen, z.B. HDPE oder LDPE, Polypropylen, Polyisobutylen, Polystyrol (PS), Polyvinylchlorid (PVC), Polyvinylidenchlorid, Polyvinylbutyral, Polytetrafluorethylen, Polychlortrifluorethylen, Polyacrylate, Polymethacrylate wie Polymethylmethacrylat (PMMA), Polyamid, Polyethylenterephthalat (PET), Polycarbonat, regenerierte Cellulose, Cellulosenitrat, Celluloseacetat, Cellulosetriacetat (TAC), Celluloseacetatbutyrat oder Kautschuk-Hydrochlorid. Eine lackierte Oberfläche kann aus üblichen Grundanstrichen oder Lacken gebildet sein. In einer bevorzugten Ausführungsform sind die Substrate Folien, insbesondere Polyethylenterephthalatfolien oder Polyimidfolien. Falls die Herstellung der Strukturen bereits auf der Oberfläche erfolgt, muss die Oberfläche die Bedingungen der Herstellung, wie zum Beispiel die Temperaturen, aushalten können.

Die Nanofasern umfassen mindestens eine photokalytisch aktive Komponente. Dabei wird unter einer photokatalytisch aktiven Komponente eine Verbindung verstanden, welche die Reduktion eines Metallions in einem Metallkomplex zum Metall direkt und/oder durch oxidative Aktivierung des Metallkomplexes oder einer weiteren Substanz indirekt bewirkt, ohne dabei selbst zersetzt zu werden. Durch die bei der Oxidation entstehenden Produkte kommt es zu einer Zersetzung des Metallkomplexes und Reduktion des Metallions des Komplexes. Bei dem photokatalytischen Material handelt es sich um TiO₂.

Das Titandioxid liegt mindestens als Anatas und als amorphes Titandioxid vor. Besonders bevorzugt liegt die Größe der Anatas-Kristallite bei unter 20 nm, bevorzugt bei unter 10 nm (bestimmt mit Röntgenbeugung), eingebettet in einer Matrix aus amorphem Titandioxid. Die Nanofasern bestehen aus einem Komposit aus Anatas und amorphem Titandioxid. Diese Umwandlung kann durch die Wahl der Kalzinierungsbedingungen gesteuert werden.

Besonders bevorzugt sind Nanofasern, welche eine spezifische Oberfläche von mindestens 80 m²/g, bevorzugt von mindestens 90 m²/g aufweisen, insbesondere Nanofasern, welche aus einem Komposit aus Anatas und amorphem Titandioxid bestehen.

Bevorzugt weisen die Nanofasern eine durchschnittliche Länge von über 10 µm, insbesondere über 20 µm, besonders bevorzugt über 50 µm auf.

Die Nanofasern werden durch Elektrospinnen erhalten.

Dazu wird eine Zusammensetzung aus einem Matrixmaterial oder einem Vorläufer davon und einer photokatalytischen Komponente oder einem Vorläufer davon hergestellt.

Diese wird über Elektrospinnen zu einer Nanofaser versponnen.

Es kann erforderlich sein die Nanofasern zu behandeln, beispielsweise zu trocknen, beispielsweise bei Temperaturen von unter 200 °C, insbesondere unter 150 °C.

Es kann erforderlich sein, die Nanofasern direkt nach dem Elektrospinnen vor der weiteren Bearbeitung für mindestens 12 Stunden ruhen zu lassen.

Es kann erforderlich sein die Nanofasern auf das endgültige Substrat aufzutragen.

Bevorzugt weisen die Nanofasern nach dem Elektrospinnen einen mittleren Durchmesser von unter 1 µm, insbesondere von unter 500 nm auf (bestimmt mit ESEM), insbesondere unter 400 nm. Bevorzugt weisen die Nanofasern einen runden Querschnitt auf. Der Durchmesser liegt bevorzugt bei 30 nm bis 500 nm, insbesondere bei 50 bis 350 nm.

Es kann erforderlich sein, die Nanofasern vor ihrer Verwendung einer Temperaturbehandlung bei über 300 °C, insbesondere über 400 °C zu unterziehen, bevorzugt 300 bis 800 °C, insbesondere 300 °C bis 600 °C. Die Dauer der Temperaturbehandlung kann dabei zwischen 1 Minute und 5 Stunden sein. Bei der Verwendung von Titandioxid kann so Anatas erhalten werden.

In einer Ausführungsform der Erfindung ist umfasst die photokatalytisch aktive Komponente Nanopartikel. Bevorzugt Nanopartikel hergestellt durch einen nicht hydrolytischen Sol-Gel-Prozess. Dazu wird eine hydrolysierbare Titanverbindung und/oder Zinkverbindung mit einem Alkohol und/oder einer Säure, bevorzugt Karbonsäure, umgesetzt, bevorzugt unter Schutzgasathmosphäre. Die Reaktion wird bevorzugt bei Temperaturen zwischen 10 °C und 100 °C, bevorzugt zwischen 15 °C und 30 °C durchgeführt. In einer Ausführungsform kann die Umsetzung bei Raumtemperatur durchgeführt werden.

Bei der hydrolysierbaren Titanverbindung handelt es sich insbesondere um eine Verbindung der Formel TiX₄, wobei die hydrolysierbaren Gruppen X, die verschieden voneinander oder vorzugsweise gleich sind, beispielsweise Wasserstoff, Halogen (F, Cl, Br oder I, insbesondere Cl und Br), Alkoxy (vorzugsweise C₁₋₆-Alkoxy, insbesondere C₁₋₄-Alkoxy, wie z.B. Methoxy, Ethoxy, n-Propoxy, i-Propoxy, Butoxy, i-Butoxy, sek.-Butoxy und tert.-Butoxy), Aryloxy (vorzugsweise C₆₋₁₀-Aryloxy, wie z.B. Phenoxy), Acyloxy (vorzugsweise C₁₋₅-Acyloxy, wie z.B. Acetoxy oder Propionyloxy) oder Alkylcarbonyl (vorzugsweise C₂₋₇-Alkylcarbonyl, wie z.B. Acetyl) sind. Ein Beispiel für ein Halogenid ist TiCl₄. Weitere hydrolysierbare Reste X sind Alkoxygruppen, insbesondere C₁₋₄-Alkoxy. Konkrete Titanate sind Ti(OCH₃)₄, Ti(OC₂H₅)₄ und Ti(n- oder i-OC₃H₇)₄.

Im Falle einer Zinkverbindung kommen Karbonsäureverbindung des Zinks in Betracht, beispielsweise Zn(OAc)₂.

Bei dem Alkohol und/oder der Säure handelt es sich in der Regel um niedere Alkohole, sowie anorganische Säuren oder Karbonsäuren. Beispiele für solche Verbindung sind Alkylalkohole, wie Methanol, Ethanol, n-Propanol, i-Propanol, n-Butanol, i-Butanol, Neopentanol, Glykol, 1,3-Propandiol oder Benzylalkohole, wie Benzylalkohol, welche auch am Aromaten substituiert sein können. Beispiele für Karbonsäuren umfassen beispielsweise Ameisensäure, Essigsäure, Propionsäure, Buttersäure, Oxalsäure. Es können auch Mischungen der Lösungsmittel eingesetzt werden. Die Verbindung wird bevorzugt auch als Lösungsmittel eingesetzt, d.h. im deutlichen Überschuss. Beispiele für anorganische Säuren sind Salzsäure, Schwefelsäure, Phosphorsäure oder Salpetersäure. Diese Säuren können als Lösung in Wasser oder in Alkohol eingesetzt werden. Es kann erforderlich sein, die Hydrolyse durch Zugabe von Wasser zu unterstützen.

Um kristalline Nanopartikel zu erhalten, kann es erforderlich sein, noch eine Wärmebehandlung, bevorzugt eine Wärmebehandlung, beispielsweise auch unter autogenem Druck, durchzuführen. Dazu wird die Reaktionsmischung in einem geschlossenen Behälter bei einer Temperatur zwischen 50 °C und 300 °C für 2 Stunden bis 48 Stunden behandelt.

Die erhaltenen Nanopartikel können durch einfache Zentrifugation und Entfernung des Lösungsmittels gewonnen werden.

Bevorzugt weisen diese Nanopartikel einen durchschnittlichen Durchmesser von unter 200 nm auf (gemessen mit TEM), bevorzugt unter 100 nm, insbesondere unter 50 nm auf.

Die Nanopartikel können auch dotiert sein, beispielsweise um ihre Absorption in andere Spektralbereiche zu verschieben.

Dazu kann bei den Nanopartikeln bei ihrer Herstellung eine geeignete Metallverbindung zur Dotierung eingesetzt werden, z.B. ein Oxid, ein Salz oder eine Komplexverbindung, z.B. Halogenide, Nitrate, Sulfate, Carboxylate (z.B. Acetate) oder Acetylacetonate. Die Verbindung sollte in dem für die Herstellung der Nanopartikel verwendeten Lösungsmittel zweckmäßigerweise löslich sein. Als Metall eignet sich jedes Metall, insbesondere ein Metall ausgewählt aus der 5. bis 14. Gruppe des Periodensystems der Elemente und der Lanthanoiden und Actiniden. Die Gruppen werden hier entsprechend dem neuen IUPAC-System aufgeführt, wie es in Römpp Chemie Lexikon, 9. Auflage, wiedergegeben ist. Das Metall kann in der Verbindung in jeder geeigneten Oxidationsvorstufe vorkommen.

Beispiele für geeignete Metalle für die Metallverbindung sind W, Mo, Zn, Cu, Ag, Au, Sn, In, Fe, Co, Ni, Mn, Ru, V, Nb, Ir, Rh, Os, Pd und Pt. Metallverbindungen von W(VI), Mo(VI), Zn(II), Cu(II), Au(III), Sn(IV), In(III), Fe(III), Co(II), V(V) und Pt(IV) werden bevorzugt verwendet. Sehr gute Ergebnisse werden insbesondere mit W(VI), Mo(VI), Zn(II), Cu(II), Sn(IV), In(III) und Fe(III) erreicht. Konkrete Beispiele für bevorzugte Metallverbindungen sind WO₃, MoO₃, FeCl₃, Silberacetat, Zinkchlorid, Kupfer(II)-chlorid, Indium(III)-oxid und Zinn(IV)-acetat.

Das Mengenverhältnis zwischen der Metallverbindung und der Titan- oder Zinkverbindung hängt auch von dem eingesetzten Metall und dessen Oxidationsstufe ab. Im Allgemeinen werden z.B. solche Mengenverhältnisse eingesetzt, dass sich ein Molverhältnis von Metall der Metallverbindung zu Titan/Zink der Titan- oder Zinkverbindung (Me/Ti(Zn)) von 0,0005:1 bis 0,2:1, bevorzugt 0,001:1 bis 0,1:1 und bevorzugter 0,005:1 bis 0,1:1 ergibt.

Die erhaltenen Nanopartikel können auch oberflächenmodifiziert werden, beispielsweise um ihnen eine Kompatibilität mit dem verwendeten Matrixmaterial zu verleihen. Außerdem ist es, beispielsweise durch die Oberflächenmodifikation mit fluorierten Gruppen möglich, einen Konzentrationsgradienten der Nanopartikel innerhalb der Nanofasern zu erreichen. Die Nanopartikel lagern sich an der Oberfläche der Nanofaser an.

Die Zusammensetzung umfasst eine Vorläuferverbindung für die photokatalytisch aktive Komponente. Dies sind beispielsweise die vorstehend genannten hydrolysierbaren Verbindungen für die Nanopartikel. Es kann erforderlich sein, die Verbindung zunächst zu einem Sol umzusetzen. Dies kann beispielsweise durch Zugabe einer Säure, wie Essigsäure, Salzsäure, etc, geschehen. Die Zusammensetzung umfasst außerdem mindestens ein Matrixmaterial oder mindestens ein Vorläufer davon. Es handelt sich um organische Polymere und/oder Oligomere, bevorzugt organische Polymere und/oder Oligomere, die polare Gruppen, wie Hydroxyl-, primäre, sekundäre oder tertiäre Amino-, Carboxyl- oder Carboxylatgruppen, aufweisen, verwendet werden. Typische Beispiele sind Polyvinylalkohol, Polyethylenoxid, Polyvinylpyrrolidon, Polyacrylamid, Polyvinylpyridin, Polyallylamin, Polyacrylsäure, Polyvinylacetat wie Polyvinylbutyral, Polymethylmethacrylsäure, Stärke, Gummi arabicum, andere polymere Alkohole wie z.B. Polyethylen-Polyvinylalkohol-Copolymere, Polyethylenglycol, Polypropylenglycol und Poly(4-vinylphenol) bzw. davon abgeleitete Monomere oder Oligomere. Bevorzugt ist Polyvinylpyrollidon (PVA).

Bevorzugt sind organische Polymere mit einer molekularen Masse von über 200000 g/mol (Gewichtsmittel M_{w}) bis 3000000 g/mol.

Die Zusammensetzung kann auch noch mindestens ein Lösungsmittel enthalten. Alle Bestandteile müssen in dem Lösungsmittel löslich oder dispergierbar sein. Es kann sich beispielweise um Alkohole wie Methanol, Ethanol oder Isopropanol handeln. Bevorzugt ist/sind ein oder mehrere Lösungsmittel mit einem Siedepunkt von unter 150 °C, insbesondere unter 100 °C.

Es können auch noch weitere Additive enthalten sein wie grenzflächenaktive Mittel, Antioxidationsmittel, Weichmacher.

Die Viskosität der Zusammensetzung kann entsprechend den Bedingungen des Elektrospinnens angepasst werden.

Abhängig von der Zusammensetzung beträgt der Gehalt an Matrixkomponente im Falle einer organischen Matrixkomponente zwischen 2 und 15 Gew.-% der Zusammensetzung, insbesondere zwischen 2 und 10 Gew.-%.

Es kann erforderlich sein, die Zusammensetzung vor dem Elektrospinnen für 1 Stunde bis 72 Stunden zu mischen, insbesondere wenn die Zusammensetzung hydrolysierbare Verbindungen umfasst.

Als Bedingungen für das Elektrospinnen wird eine Spannung von 8 bis 20 kV bei einer Flussrate der Spinnmasse von 0,3 bis 1,5 mL/h bevorzugt. Der Abstand zur Oberfläche, auf der die Nanofasern aufgefangen werden, beträgt bevorzugt 10 bis 30 cm. Bevorzugt wird eine Nadel mit einem Innendurchmesser von 0,4 mm bis 2 mm verwendet.

In einer Ausführungsform der Erfindung werden die Nanofasern über Elektrospinnen mit einer konzentrischen Ringdüse hergestellt. Solche Düsen weisen eine zentrale Öffnung und eine umgebende Ringöffnung auf. Daher können die Nanofasern aus zwei verschiedenen Zusammensetzungen hergestellt werden, von welchen eine den Kern (zentrale Ringdüse) und die andere die Hülle (umgebende Ringöffnung) der Nanofaser bildet. Dadurch ist es beispielsweise möglich, Nanofasern herzustellen, welche die photokatalytische Komponente nur in der Hülle aufweisen und nicht im Kern.

In der erfindungsgemäßen Ausführungsform (i) der Erfindung nach Anspruch 1 umfasst die Spinnzusammensetzung einen Vorläufer für eine photokatalytische Komponente, insbesondere eine hydrolysierbare Titanverbindung oder ein Kondensat davon, und mindestens ein organisches Polymer und/oder Oligomer, wie vorstehend beschrieben. Dies sind beispielsweise die vorstehend genannten hydrolysierbaren Verbindungen für die Nanopartikel. Es kann erforderlich sein, die Verbindung zunächst zu einem Sol umzusetzen. Dies kann beispielsweise durch Zugabe einer Säure, wie Essigsäure, Salzsäure, etc, geschehen.

In einer weiteren bevorzugten Ausführungsform (ii) der Erfindung umfasst die Zusammensetzung für die Hülle photokatalytisch aktive Nanopartikel und die Zusammensetzung für den Kern mindestens eine Vorläuferverbindung für die photokatalytische Komponente.

In der Ausführungsform der Erfindung nach (i) ist die Vorläuferverbindung eine Vorläuferverbindung für Titandioxid und die hergestellten Nanofasern werden vor der Verwendung einer Temperaturbehandlung unterworfen. Bevorzugt werden die Bedingungen der Temperaturbehandlung so gewählt, dass aus der Vorläuververbindung ein Komposit aus Antatas und amorphem Titandioxid, insbesondere Anataskristallite in einer Matrix aus amorphem Titandioxid erhalten werden. Dies ist insbesondere durch eine Kalzinierungstemperatur von über 430 °C und unter 470 °C, insbesondere 440 °C bis 460 °C. Die Dauer der Temperaturbehandlung liegt dabei bevorzugt zwischen 30 Minuten und 4 Stunden. Bei Temperaturen zwischen 430 °C und 470 °C werden Nanofasern erhalten, welche eine besonders hohe Porosität aufweisen und gleichzeitig Kristallite von Anatas in einer Matrix aus amorphem Titandioxid enthalten. Dies ist besonders günstig für eine homogene Metallisierung. Dadurch können leitfähige Strukturen erhalten werden. Die Heizrate liegt bevorzugt bei 1-3 °C/Min.

Die Temperaturbehandlung kann auf dem endgültigen Substrat stattfinden.

In einem nächsten Schritt wird eine Vorläuferzusammensetzung umfassend mindestens eine Vorläuferverbindung für eine Metallschicht auf das Substrat aufgetragen. Zum Aufbringen der Vorläuferzusammensetzung können übliche Verfahren verwendet werden, beispielsweise Tauchen, Rollen, Rakeln, Fluten, Ziehen, Spritzen, Schleudern oder Aufstreichen. Üblicherweise ist die Vorläuferzusammensetzung eine Lösung oder Suspension der mindestens einen Vorläuferverbindung. Diese Lösung kann auch ein Gemisch aus mehreren Vorläuferverbindungen enthalten. Auch können weitere Hilfsstoffe, wie Reduktionsmittel oder Benetzungshilfsmittel in der Lösung enthalten sein.

Bei der Vorläuferverbindung handelt es sich bevorzugt um einen Metallkomplex. Dieser umfasst mindestens ein Metallion oder ein Metallatom und mindestens eine Art von Liganden. Bei dem Metall handelt es sich beispielsweise um Kupfer, Silber, Gold, Nickel, Zink, Aluminium, Titan, Chrom, Mangan, Wolfram, Platin oder Palladium. In einer bevorzugten Ausführungsform ist die Vorläuferverbindung ein Silber,- Gold- oder Kupferkomplex, besonders bevorzugt ein Silberkomplex. Die Vorläuferverbindung kann auch mehrere Arten von Metall oder Mischungen von Metallkomplexen umfassen.

Als Ligand werden in der Regel Chelatliganden eingesetzt. Diese sind in der Lage besonders stabile Komplexe zu bilden. Dabei handelt es sich um Verbindungen, welche mehrere Hydroxylgruppen und/oder Aminogruppen aufweisen. Bevorzugt sind Verbindungen mit einem Molekulargewicht von unter 200 g/mol, besonders bevorzugt Verbindungen mit mindestens einer Hydroxylgruppe und mindestens einer Aminogruppe. Beispiele für mögliche Verbindungen sind 3-Amino-1,2-propandiol, 2-Amino-1-butanol, Tris(hydroxymethyl)-aminomethan (TRIS), NH₃, Nikotinamid oder 6-Aminohexansäure. Es können auch Mischungen dieser Liganden verwendet werden. Im Falle des bevorzugten Silberkomplexes ist als Ligand TRIS bevorzugt.

Die Vorläuferzusammensetzung ist bevorzugt eine Lösung der Vorläuferverbindung. Als Lösungsmittel kommen alle geeigneten Lösungsmittel in Betracht. Dies sind beispielsweise Wasser, Alkohole, wie Methanol, Ethanol, n-Propanol oder i-Propanol. Es können auch Mischungen der Lösungsmittel verwendet werden, bevorzugt Mischungen von Wasser und Ethanol. Als Mischungsverhältnis ist ein Verhältnis von 50:50 Gew.-% bis zu 20:80 Gew.-% von H₂O:Alkohol, bevorzugt Ethanol, geeignet.

Die Vorläuferzusammensetzung kann zusätzlich noch weitere Hilfsmittel, wie Tenside oder unterstützende Reduktionsmittel enthalten.

Die Vorläuferzusammensetzung kann auf beliebige Weise auf das Substrat aufgetragen werden. Dabei wird die Vorläuferzusammensetzung so aufgetragen, dass durch die photokatalytische Aktivität der Nanofasern direkt oder indirekt die Reduktion des Metallions zum Metall ausgelöst werden kann. Üblicherweise geschieht dies dadurch, dass die Vorläuferzusammensetzung direkt auf die Nanofasern aufgetragen wird.

Zum Aufbringen der Vorläuferzusammensetzung können übliche Verfahren verwendet werden, beispielsweise Tauchen, Sprühen, Rollen, Rakeln, Fluten, Ziehen, Spritzen, Schleudern oder Aufstreichen.

Beispielsweise kann das Auftragen der Vorläuferzusammensetzung über einen Rahmen, welcher auf das Substrat gelegt wird und in den dann gebildeten durch den Rahmen begrenzten Raum die Vorläuferzusammensetzung gegeben wird. Der Rahmen kann aus einem elastischen Material bestehen. Der Rahmen kann beliebige Formen aufweisen. Üblicherweise ist es ein rechteckiger Rahmen. Der Rahmen umschließt dabei beispielsweise eine Fläche auf dem Substrat von zwischen 1 cm² bis 625 cm² bei einer Seitenlänge zwischen 1 cm und 25 cm. Die Höhe des Rahmens auf dem Substrat bestimmt dabei die Dicke der aufgetragenen Vorläuferzusammensetzung. Der Rahmen kann dabei zwischen 25 µm und 5 mm hoch sein, bevorzugt zwischen 30 µm und 2 mm.

In einem nächsten Schritt wird das Metallion der Vorläuferverbindung durch Einwirkung von elektromagnetischer Strahlung auf die photokatalytische Komponente der Nanofasern zum Metall reduziert. Dabei bildet sich eine metallische Schicht. Bei der elektromagnetischen Strahlung handelt es sich um Strahlung der Wellenlänge zur Anregung der photokatalytischen Komponente. Dabei kann die Bestrahlung durch Verwendung einer flächigen Strahlungsquelle, wie einer Lampe, oder durch Laser geschehen. Bevorzugt wird eine Wellenlänge im sichtbaren oder ultravioletten (UV) Bereich des elektromagnetischen Spektrums verwendet, bevorzugt Strahlung mit einer Wellenlänge von < 500 nm, beispielsweise zwischen 200 und 450 nm oder zwischen 250 nm bis 410 nm. Bevorzugt ist es Strahlung mit einer Wellenlänge von <400 nm.

Als Lichtquelle kann jede geeignete Lichtquelle verwendet werden. Beispiele für eine Lichtquelle sind Quecksilberdampflampen oder Xenonlampen.

Die Lichtquelle ist in geeignetem Abstand zu dem zu belichtenden Substrat angeordnet. Der Abstand kann dabei beispielsweise zwischen 2,5 cm und 50 cm betragen. Die Intensität der Strahlung kann dabei in einem Spektralbereich von 250 nm bis 410 nm zwischen 30 mW/cm² und 70 mW/cm² liegen.

Die Bestrahlung sollte möglichst senkrecht zur zu belichtenden Oberfläche erfolgen.

Die Bestrahlung wird in der zur Bildung der metallischen Schicht ausreichenden Dauer durchgeführt. Die Dauer hängt dabei von der Beschichtung, der Art des Initiators, der Art der Lampe, des verwendeten Wellenlängenbereichs und der Intensität der Bestrahlung ab. Falls leitfähige Strukturen erzeugt werden sollen, kann eine längere Bestrahlung erforderlich sein. Bevorzugt ist eine Dauer der Bestrahlung zwischen 5 Sekunden und 30 Minuten, bevorzugt zwischen 20 Sekunden und 15 Minuten.

Falls zur Bestrahlung ein Laser verwendet wird, kann beispielsweise ein Argon-Ionen-Laser (351 nm) mit 10 mW eingesetzt werden, dessen Laserstrahl fokussiert und kollimiert und mit einer Geschwindigkeit von 2 mm/s über das zu bestrahlende Substrat geführt wird.

In einer weiteren Ausführungsform der Erfindung wird das Substrat nach der Bestrahlung und Reduktion der Vorläuferverbindung weiter behandelt. So kann beispielsweise die nicht reduzierte überschüssige Vorläuferzusammensetzung durch Spülen der Oberfläche entfernt werden, beispielsweise mit deionisiertem Wasser oder einer anderen geeigneten Substanz. Das beschichtete Substrat kann danach getrocknet werden, beispielsweise durch Erwärmen in einem Ofen, Druckluft und/oder durch Trocknen bei Raumtemperatur.

Es können auch mehrfach, zum Beispiel 2, 3 oder 4mal bestrahlt werden.

In einer bevorzugten Ausführungsform wird nach einer ersten Bestrahlung das Substrat gewaschen und danach mindestens eine weitere Bestrahlung durchgeführt. Dadurch kann die unselektive Abscheidung auf der Oberfläche verringert werden.

Es können auch noch weitere Schichten, beispielsweise zum Schutz der beschichteten Oberfläche vor Oxidation und Wasser oder vor UV-Strahlung aufgebracht werden.

In einer bevorzugten Ausführungsform der Erfindung erfolgt beim Auftragen der Vorläuferzusammensetzung und/oder bei der Reduktion eine Strukturierung. Darunter wird im Sinne der Erfindung eine Vorbereitung der räumlich begrenzten Erzeugung der metallischen Struktur verstanden. Dies ist auf unterschiedliche Weise möglich. Zum einen kann das Substrat nur in bestimmten Bereichen mit der Nanofasern beschichtet werden. Außerdem ist es möglich, die Vorläuferzusammensetzung nur auf bestimmte Bereiche aufzubringen. Des Weiteren kann natürlich auch die Einwirkung der elektromagnetischen Strahlung auf bestimmte Bereiche begrenzt werden. Diese Verfahren können natürlich auch in Kombination verwendet werden. So ist es beispielsweise möglich, die Vorläuferzusammensetzung flächig aufzubringen und dann durch eine Maske zu belichten. Es ist natürlich ebenso möglich, die Vorläuferzusammensetzung gezielt aufzubringen und danach flächig zu belichten.

Es ist gerade bei der Verwendung von Elektrospinnen auch möglich, die gesponnenen Nanofasern auf ein strukturiertes Substrat aufzubringen, insbesondere ein Substrat mit länglichen Vertiefungen. Aufgrund ihrer Länge ordnen sich die Nanofasern entlang der Vertiefungen an.

Nach dem Verfahren können auch noch weitere Schichten aufgebracht werden, beispielsweise um die beschichtete Oberfläche des Substrats gegen UV-Strahlung zu schützen.

Bei den durch Strukturierung aufgetragenen Strukturen gibt es eigentlich keine Beschränkung. So können sowohl verbundene Strukturen, wie Leiterbahnen aufgetragen werden. Außerdem ist es möglich auch punktförmige Strukturen aufzutragen. Aufgrund der guten Auflösung ist es mit dem Verfahren möglich, für das Auge nicht sichtbare leitfähige Punkte auf eine Folie aufzutragen. Dies spielt bei der Herstellung von Oberflächen für TouchScreens eine große Rolle.

Das Verfahren der Erfindung beinhaltet ein Verfahren zur Herstellung von photokatalytisch aktiven Kompositfasern umfassend Anatas und amorphes Titandioxid gemäß der vorstehenden Ausführungsform nach (i) wie vorstehend beschrieben ohne die Metallisierung. Dabei umfasst die Spinnzusammensetzung einen mindestens eine hydrolysierbare Titanverbindung oder ein Kondensat davon, und mindestens ein organisches Polymer und/oder Oligomer, wie vorstehend beschrieben. Dies sind beispielsweise die vorstehend genannten hydrolysierbaren Titanverbindungen für die Nanopartikel. Es kann erforderlich sein, die Verbindung zunächst zu einem Sol umzusetzen. Dies kann beispielsweise durch Zugabe einer Säure, wie Essigsäure, Salzsäure, etc, geschehen.

Die Spinnzusammensetzung wird durch Elektrospinnen versponnen und die Nanofasern auf ein Substrat aufgebracht und danach wird wie vorstehend beschrieben eine Temperaturbehandlung von über 430 °C und unter 470 °C, insbesondere 440 °C bis 460 °C durchgeführt. Die Dauer der Temperaturbehandlung liegt dabei bevorzugt zwischen 30 Minuten und 4 Stunden. Insbesondere bei Temperaturen zwischen 430 °C und 470 °C werden Nanofasern erhalten, welche eine besonders hohe Porosität aufweisen und gleichzeitig Kristallite von Anatas in einer Matrix aus amorphem Titandioxid enthalten. Dies ist besonders günstig für eine homogene Metallisierung. Dadurch können leitfähige Strukturen erhalten werden. Die Heizrate liegt bevorzugt bei 1-3 °C/Min..

Die Erfindung betrifft außerdem ein beschichtetes Substrat erhalten nach einem erfindungsgemäßen Verfahren. Ein solches Substrat zeichnet sich durch eine photokalytisch aktive Schicht aus, welche photokatalytisch aktive Nanofasern umfasst aus. Diese Schicht weist eine Dicke zwischen 50 nm bis 200 µm auf. Bevorzugte Schichtdicken liegen zwischen 100 nm und 1 µm, bevorzugt 50 nm bis 700 nm.

Die Nanofasern umfassen ein Komposit aus Anatas und amorphem Titandioxid, insbesondere wie gemäß dem erfindungsgemäßen Verfahren erhalten.

Die Nanofasern sind mindestens teilweise metallisiert. Als Metall kommen dabei insbesondere Kupfer, Silber, Gold, Nickel, Zink, Aluminium, Titan, Chrom, Mangan, Wolfram, Platin oder Palladium, bevorzugt Silber oder Gold, in Frage. Es kann sich um einzelne Partikel handeln. Bevorzugt sind die Nanofasern mit dem Metall bedeckt. Dies kann mit TEM festgestellt werden. Die Beschichtung auf dem Substrat ist leitfähig. Darunter wird eine Struktur verstanden, welche bei einem Abstand von 5 mm Widerstand in mindestens einer Richtung einen von unter 3 MΩ, bevorzugt unter 2MΩ, ganz besonders bevorzugt von unter 1 MΩ aufweist. Aufgrund der faserförmigen Struktur weisen hergestellte Strukturen bevorzugt einen anisotropen Widerstand auf. Dies bedeutet, dass sich der Widerstand in Abhängigkeit von der Richtung der Messung um mindestens Faktor 2, mindestens Faktor 10, insbesondere Faktor 100.

Die Dicke der metallischen Schicht kann bis zu 200 nm dick sein. Bevorzugte Schichtdicken liegen zwischen 10 und 100 nm, bevorzugt 5 nm bis 50 nm.

In einer besonders vorteilhaften Ausführungsform der Erfindung ist die Beschichtung auf dem Substrat mindestens teilweise transparent, insbesondere vollständig transparent. Dies kann dadurch erreicht werden, dass der Bedeckungsgrad der Nanofasern nach dem Elektrospinnen in den beschichteten Bereichen auf der Oberfläche des Substrats bei unter 20 % der beschichteten Oberfläche des Substrats liegt, insbesondere zwischen 10-20 %, bevorzugt zwischen 10 und 15 %. Dies kann beispielsweise durch die Dauer des Elektrospinnens beeinflusst werden. Die Bedeckung kann durch Messung der durchschnittlichen Transmission und Haze in Abhängigkeit von der Dauer des Elektrospinnens bestimmt werden.

Bevorzugt verringert die Beschichtung mit Nanofasern die durchschnittliche Transmission nur um bis zu 5 %.

In einer Weiterbildung der Erfindung weist das Substrat die metallische Struktur eine Strukturierung mit Strukturelementen mit einer Ausdehnung von unter 50 µm, bevorzugt unter 10 µm auf. Bei den Strukturelementen kann es sich um metallische und/oder nicht metallische Bereiche handeln. Besonders bevorzugt ist die metallische Struktur eine metallische Beschichtung der Nanofasern.

In einer besonders vorteilhaften Weiterbildung der Erfindung weist das beschichtete Substrat metallische Strukturen auf, welche mindestens teilweise transparent sind. Dies kann beispielsweise durch das Aufbringen von Strukturen mit einer Auflösung von unter 20 µm auf ein transparentes Substrat erreicht werden, bevorzugt unter 10 µm.

Die beschichteten Substrate, welche mit dem erfindungsgemäßen Verfahren erhalten werden, können für viele Anwendungen eingesetzt werden.

Zum einen eignet sich das Verfahren zum Aufbringen von reflektierenden Metallschichten auf Oberflächen. Diese können beispielsweise als reflektierende Schichten in holographischen Anwendungen verwendet werden.

Ein besonderer Vorteil der Erfindung liegt in der Herstellung von leitfähigen Strukturen. Diese eignen sich als Leiterbahnen in elektronischen Anwendungen, insbesondere in Touch-Screen-Displays, Solarkollektoren, Displays, als RFID-Antenne oder in Transistoren. Sie eignen sich daher als Ersatz in Produkten, welche bisher auf ITO (Indiumzinnoxid) Basis hergestellt wurden, wie beispielsweise in TCO-Beschichtungen (TCO: transparent conductive oxide). Es können insbesondere transparente Strukturen, sowie Strukturen mit anisotropem Widerstand erhalten werden.

Die Strukturen können aber auch im Bereich von Transistoren eingesetzt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: a) Verteilung der Durchmesser ("Fiber Diameter" in nm gegen Pulse (Counts)) der Fasern direkt nach Herstellung; b) ESEM-Aufnahme (Environmental Scanning Electron Microscope) der Fasern nach (i Vergleich);
- Fig. 2: b) Verteilung der Durchmesser der Nanofasern ("Fiber Diameter" in nm gegen Pulse (Counts)); b) ESEM-Aufnahme der Nanofasern nach (i);
- Fig. 3: a) Darstellung der Durchmesserverteilung ("Fiber Diameter" in nm) für Nanofasern nach der Herstellung ("AsSpun") nach 5 Minuten Kalzinierung bei 500 °C (Calcinated 5min) und 30 Minuten Kalzinierung bei 500 °C (Calcinated 30min); b) ESEM-Abbildung der Proben nach 30 Minuten Kalzinierung;
- Fig. 4: EDS Spektren der Nanofasern (Energie in keV gegen Intensität) der Nanofasern nach Herstellung (unten "As Spun"), nach Kalzinierung von 5 Minuten (mittlerer Graph), und nach Kalzinierung von 30 Minuten (oberer Graph); und
- Fig. 5: XRD-Spektren einer Probe nach Kalzinierung bei 5 Minuten (unterer Graph), bzw. 30 Minuten (oberer Graph); Die Anatas-Signale sind bei 25,32°, 38° und 48,01°;
- Fig. 6: Größenverteilung (Range in nm) der Durchmesser der an den Nanofasern gebildeten Silberpartikeln nach 3 Minuten Bestrahlung (A), 5 Minuten Bestrahlung (B) und 7 Minuten Bestrahlung (C);
- Fig. 7: ESEM-Bild (links) einer TiO₂-Matte nach 4 Minuten Belichtung mit UV in Gegenwart von AgNO₃ tris-Komplex; Rechts: Nanofasern mit 30 % Bedeckung auf Glas ebenfalls für 4 Minuten mit UV belichtet unter gleichen Bedingungen;
- Fig. 8: Verteilung der Durchmesser der hergestellten Nanofasern gemessen mit TEM;
- Fig. 9: ESEM-Aufnahmen von Proben mit einer Kalzinierungstemperatur von 450 °C und a) FD 10 cm, CT 30 Min. b) FD 20 cm, CT 30 Min. c) FD 10 cm, CT 60 Min. d) FD 20 cm, CT 60 Min;
- Fig. 10: Repräsentative TEM-Aufnahmen von Nanofasern kalziniert bei (a) 450°C für 60 Min., (b) 475°C für 60 Min. und (c) 500°C für 60 Min.; FD jeweils 10 cm;
- Fig. 11: Raman-Spektren von repräsentativen Nanofasern kalziniert bei 450°C, 475°C und 500°C;
- Fig. 12: Plots einer Gassorptionsanalyse von Proben kalziniert bei 450 °C (links, FD 20 cm), 475 °C (Mitte, FD 15 cm) und 500 °C (rechts, FD 15 cm), CT jeweils 60 Minuten; X-Achse Partialdruck (Partial Pressure P/P0); Y-Achse jeweils Adsorbierte Menge (Quantity Adsorbed cc/g STP); Quadrate: Adsorbierte Menge (Quantity adsorbed); Kreise: De-adsorbierte Menge (Quantity De Adsorbed);
- Fig. 13: Abbildungen von Nanofasern nach Silberabscheidung an Nanofasern a) kalziniert bei 450 °C, FD 20 cm, CT 60 Min.; b) kalziniert bei 475 °C, FD 20 cm, CT 60 Min;
- Fig. 14: Bestimmung des Bedeckungsgrads (Fractional Coverage) in Abhängigkeit von der Abscheidezeit (Deposition Time) .

### Beispiele

Es wurden verschiedene Strategien für das Elektrospinnverfahren (*electrospinning*) der Nanofasern verwendet.

(i Vergleich) Einbringen von hydrothermal hergestellten Nanokristallen aus TiO₂ in eine Polymermasse und elektrospinnen zu Nanofasern;
(i) Herstellung Anatas umfassenden Nanofasern aus TiO₂ aus einer Titanalkoxid-Vorläuferverbindung und Polymerspinnmassen.
(iii Vergleich) Koaxiales Elektrospinnen von Fasern mit einem Polymerkern und einer Hülle aus hydrothermal umgewandelten TiO₂-Kristallen und nach einer Wärmebehandlung Auswaschung des Polymers, um Rühren aus Anatas zu erhalten.
(ii) Koaxiales Elektrospinnen von Nanofasern mit einem Kern aus Titanalkoxid und einer Hülle aus hydrothermal hergestellten TiO₂-Kristallen.

Alle Substrate werden verwendet um photochemisch Silber abzuscheiden.

### Versuche nach (i Vergleich)

Ultrafeine Fasern wurden durch Elektrospinnen eines wasserbasierten Sol von hydrothermal kalzinierten TiO₂-Nanokristallen erhalten. Dazu wurde Titantetraisopropoxid mit Isopropanol und Salzsäure vermischt, um ein TiO₂-Netzwerk zu erhalten. Dazu wurden Wasser und Isopropanol zugegeben um ein Sol zu erhalten. Das Sol wurde dann in einem isochoren Autoklaven eingebracht und auf 250 °C erhitzt, um TiO₂ als Anatas zu erhalten. Die erhaltenen Nanokristalle werden redispergiert und ggf. oberflächenmodifiziert. Zu dieser Zusammensetzung wird hochmolekulares Polyvinylpyrrolidon (Mw = 1300000 g/mol, hPVP) bis zu einem Gehalt von 4 Gew.-% (bezogen auf die Gesamtzusammensetzung) gegeben.

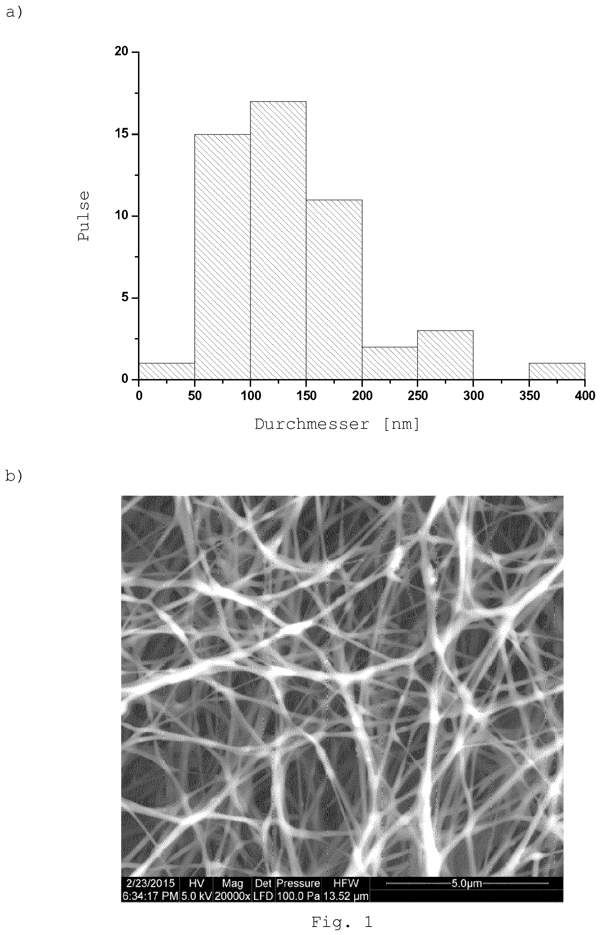

Die erhaltenen Fasern sind in Figur 1 gezeigt. Die Fasern wiesen einen sehr feinen Durchmesser auf und haben eine etwas unebene Oberfläche. Die deutet darauf hin, dass TiO₂-Partikel in den Fasern angeordnet sind.

### Versuche nach (ii)

Anatas umfassende Nanofasern wurden wie folgt erhalten. Durch langsame Hydrolyse von Titantetraisopropoxid (Ti(O-iPr)₄) in Essigsäure und Ethanol in einem Verhältnis von 0,25:1:1 wurde ein Sol erhalten. Zu diesem Sol wurde hochmolekulares Polyvinylpyrolidon (Mw = 1300000 g/mol hPVP) gegeben und mit Zugabe von Ethanol vollständig gelöst. Der Gehalt an hPVP betrug 9 Gew.-% bezogen auf die gesamte Zusammensetzung.

Durch Zugabe anderer Mengen an Ethanol wurden auch Zusammensetzungen mit einer Polymerkonzentration von 5 Gew.-% hergestellt.

Das Sol wurde für 24 Stunden ruhen gelassen (ggf. etwas gerührt) und unter folgenden Bedingungen elektroversponnen:
Eine 21G Spinndüse wurde in 15 cm Abstand senkrecht zu einer geendeten Kupferplatte ausgerichtet, welche mit Aluminiumfolie umwickelt war. Über eine Spritzenpumpe wurde ein Fluss der Spinnmasse von 0,82 mL/h, bzw. 0,5-0,8 mL/min eingestellt (Temperatur 21 °C, Luftfeuchtigkeit 43 %). Bei einer Spannung zwischen 18-21 kV, insbesondere 18-20 kV, bildete sich ein Spinnfaden.

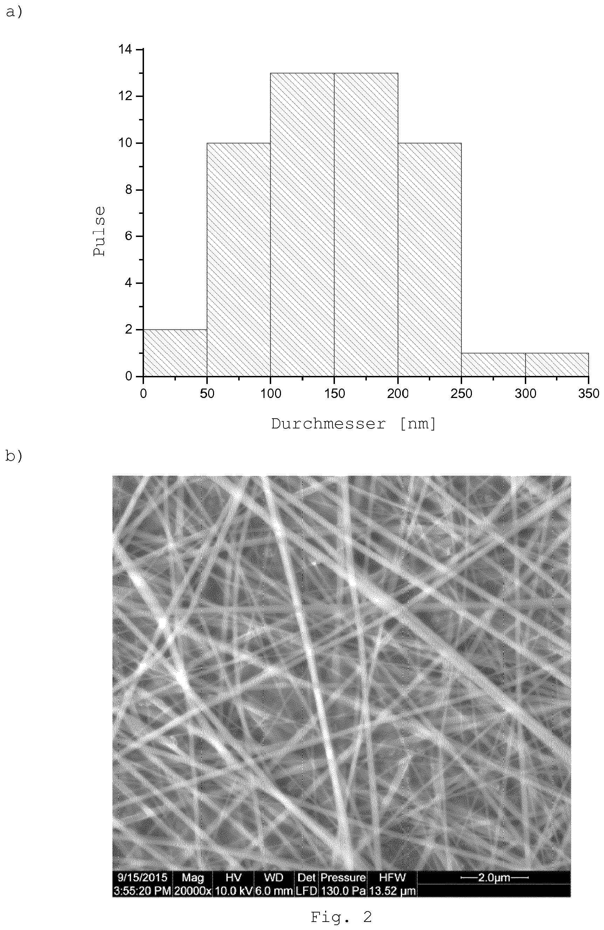

Für optische Versuche wurde eine 3 cm x 3 cm Glasplatte für verschiedene Zeiten (1 Sekunde und 15 Sekunden) unter die Spinndüse gehalten (Abstand 10 cm bis 20 cm). Figur 2 zeigt eine typische Verteilung des Faserdurchmessers der Nanofasern. Die Nanofasern zeigen einen mittleren Durchmesser von 103 +/-53 nm und eine glatte zylindrische Morphologie.

Um einzelne Nanofasern auf die Oberfläche aufzutragen, wurde die Glasplatte für 12 bis 15 Sekunden Nanofasern unter Bewegung der Glasplatte aufgetragen (5 Gew.-%; 0,5-0,8 mL/min; 21 gauge; 18-20 kV; 10-20 cm FD). Dies führte zu einer Bedeckung von 12-15 % der Glasoberfläche mit Nanofasern. Die Nanofasern sind 20 bis 100 µm auseinander und nach Kalzinierung haben alle einen maximalen Durchmesser von unter 500 nm.

Nach dem Spinnen wurden die auf dem Substrat aufgebrachten Nanofasern bei 120 °C für 12 h erwärmt, um Wasser und Lösungsmittel zu entfernen. Dies kann auch bei 80 °C für 12 bis 24 h geschehen.

Danach wurden sie bei 500 °C (Heiz- und Kühlrate jeweils 2,66 °C/min) kalziniert. Um optimale Bedingungen zur Bildung von Anatas zu untersuchen, wurden zwei unterschiedliche Verweilzeiten von 5 Minuten und 30 Minuten untersucht. Die Nanofasern mit einer Verweilzeit von 30 Minuten zeigten später eine verbesserte Bedeckung mit Silber. Alle Beispiele der Figuren 1 bis 6 wurden für 30 Minuten bei 500 °C kalziniert. Bei den anderen Proben wird die Kalzinierungstemperatur und Dauer jeweils angegeben. Nach dem Aufheizen wurde die Kalzinierungstemperatur für die angegebene Dauer gehalten.

Die Proben wurden in mindestens 3 Stunden auf Raumtemperatur abgekühlt.

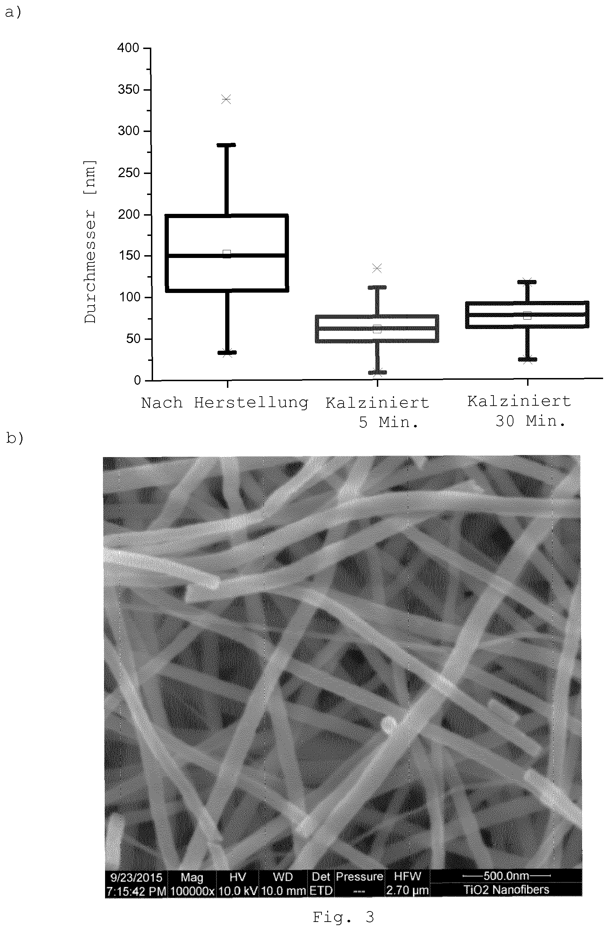

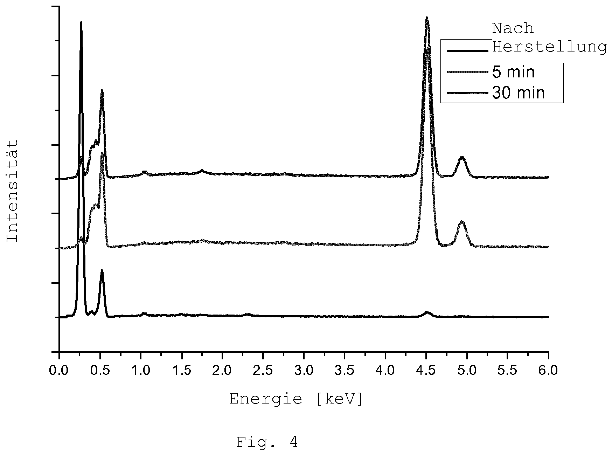

Figur 3 zeigt die Veränderung des Durchmessers der Nanofasern durch die Kalzinierung. Die Nanofasern werden deutlich dünner und die Größenverteilung verengt sich. Das in Figur 4 gezeigt EDS-Spektrum zeigt deutlich eine Abnahme des Peaks bei 0,277 keV und 0,525 keV, was der Kα-Linie von Kohlenstoff und Sauerstoff des PVP ([C₆H₉NO]ₙ) entspricht. Der Peak bei 4,508 keV entspricht Kα-Titan. Mit längerer Kalzinierung reagiert der Kohlenstoff zu CO₂ und der Sauerstoff bildet TiO₂. Im Spektrum ist auch die Ti Lα bei 0,452 keV zu erkennen. Die geringen Absorptionen von Kohlenstoff konnten dem Befestigungsband für die Proben zugeordnet werden.

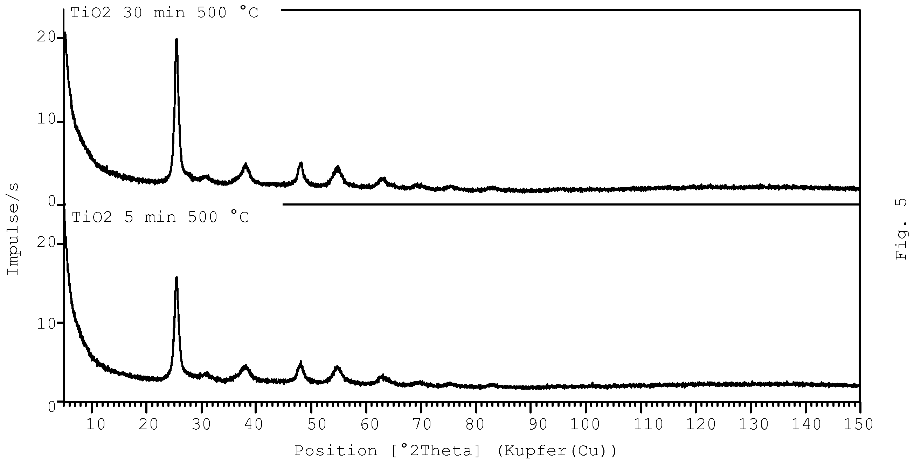

Über Röntgenbeugung (Fig. 5) konnte außerdem gezeigt werden, dass die Kalzinierung zur Bildung von Anatas-Kristallen führte.

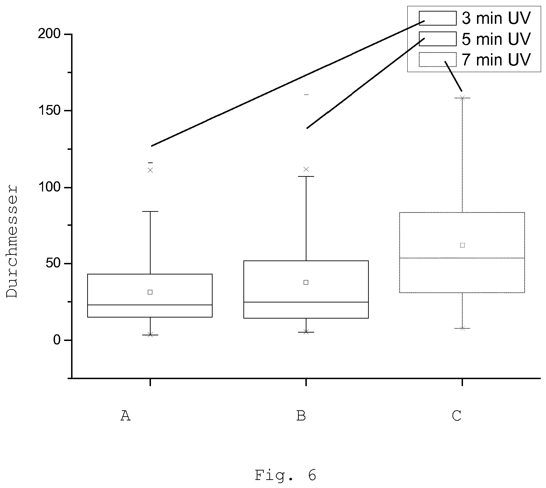

Figur 6 zeigt die Größenverteilung der an der Oberfläche gebildeten Silbernanopartikel nach verschiedenen Bestrahlungsdauern.

Für die Metallisierung der folgenden Beispiele wurde eine wässrige Silbernitratlösung mit einem Tris-Komplex als Vorläufer für die metallische Schicht verwendet. Die Zusammensetzung wurde frisch hergestellt und auf die auf einer Glasplatte aufgebrachten Nanofasern pipettiert und 30 Sekunden gewartet. Danach wurden die Nanofasern für 3 Minuten mit UV-Licht (1000 W) bestrahlt. Danach wurden die Proben gewaschen und nochmal für 2 Minuten mit UV (1000 W) bestrahlt. Das Waschen verringert die spontane Abscheidung von Silber auf der Glasoberfläche.

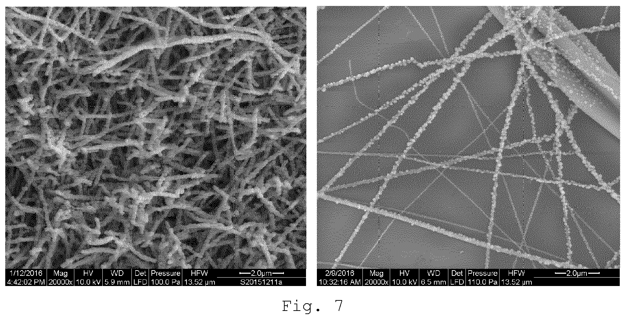

Figur 7 zeigt auf der linken Seite eine Matte aus Nanofasern (Kalziniert bei 500 °C für 30 Minuten) nach 4 Minuten Belichtung in Gegenwart eines AgNO₃ Tris-Komplexes. Die Silberbeschichtung ist metallisch und leitfähig (11.8 Ωcm) mit Kontaktwiderstand. Die Fasern auf der linken Abbildung wurden auch für 4 Minuten unter gleichen Bedingungen belichtet und weisen eine unvollständige Bedeckung mit Silber auf und sind nicht leitfähig.

Für weitere Versuche wurden der Einfluss der Wegstrecke vor dem Auftreffen auf dem Substrat ("fly distance", FD) beim Elektrospinnen, die Kalzinierungszeit (CT) und die Kalzinierungstemperatur als mögliche Faktoren untersucht. Es wurden jeweils Nanofasern aus drei verschiedenen Batches von Ausgangsmaterial hergestellt.

Für alle auf Glas hergestellten Nanofasern wurde die Transmission gemessen. Die Ergebnisse zeigt Tabelle 1. Dabei steht FD in der Probenbezeichnung für die Wegstrecke und CT für die Kalzinierungszeit in Minuten. FD10CT60 bedeutet daher eine Wegstrecke von 10 cm bei einer Kalzinierungszeit von 60 Minuten. Bei einer jeweiligen Bedeckung von 15 % der Glasoberfläche mit Nanofasern ist keine starke Verringerung der Transmission zu erkennen.

Bei einer Bedeckung von 12-15 % der Glasoberfläche mit Nanofasern wird eine Verringerung der Transparenz von bis zu 1 % gemessen, nach Silberabscheidung von bis zu 2,5 %, verglichen mit unbehandelten Glas.

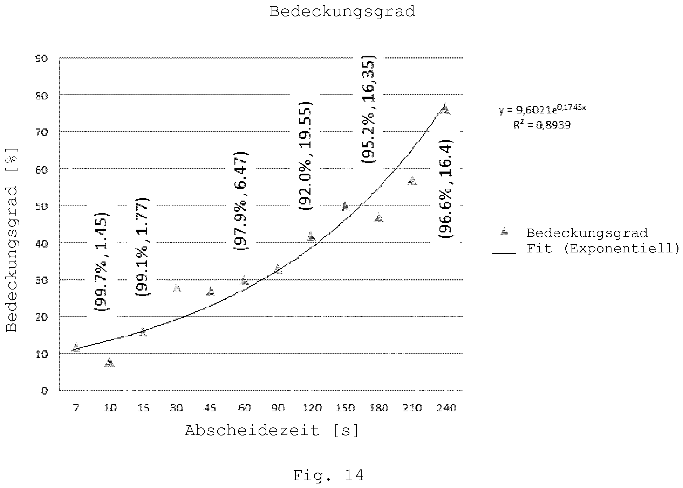

Die Bestimmung der Bedeckung zeigt Figur 14. Dazu wurde in Abhängigkeit von der Dauer des Elektrospinnens die Transmission oder Haze gemessen. Die Zahlen in Klammern geben die gemessen Transmission und Haze an.

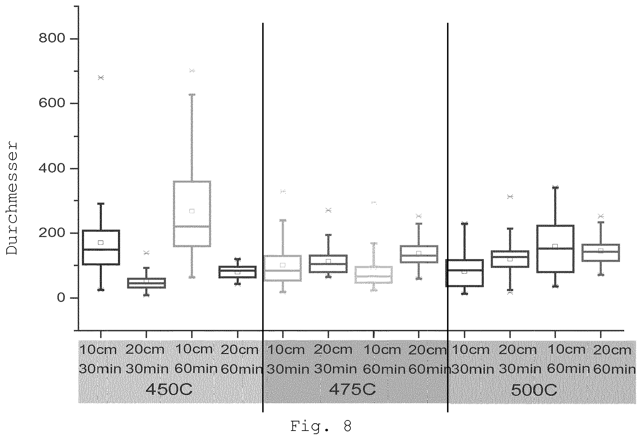

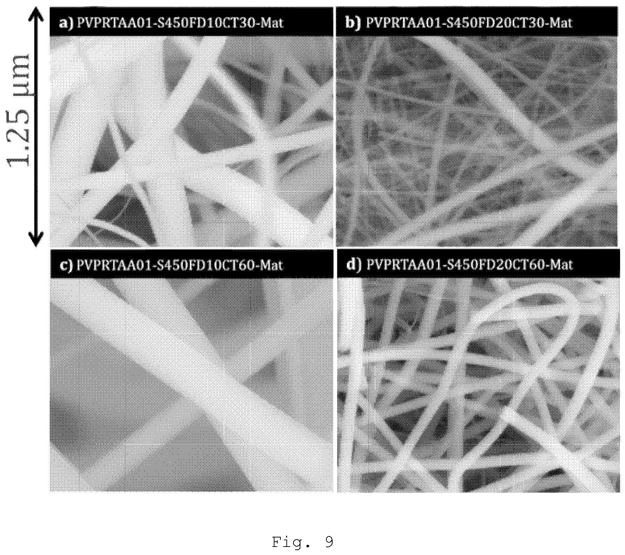

Figur 8 zeigt die Verteilung des Durchmessers der hergestellten Nanofasern in Abhängigkeit der Wegstrecke ("*flying distance",* ober Zeile der X-Achse,10 cm, bzw. 20 cm), Kalzinierungsdauer (mittlere Zahlenangabe, 30 Minuten und 60 Minuten und Kalzinierungstemperatur (450 °C, 475 °C und 500 °C jeweils für die vier darüber angeordneten Kombinationen von Wegstrecke und Kalzinierungsdauer). Die Proben, welche bei 10 cm Wegstrecke gesponnen wurden, weisen eine breitere Verteilung aus, weil eine bimodale Verteilung von sehr dünnen und dickeren Nanofasern vorliegt (z. B. Figur 9a). Die Nanofasern, welche bei 450 °C kalziniert wurden, weisen eine geringere Schrumpfung auf, als die Nanofasern, welche bei höheren Temperaturen kalziniert wurden. Abbildungen solcher Nanofasern zeigt Figur 9. Die Breite der Abbildungen entspricht 1,25 µm. Zur Bestimmung der Durchmesser wurden die Durchmesser von vielen Nanofasern einer bei den genannten Bedingungen hergestellten Matte von Nanofasern vermessen. Die Nanofasern weisen einen zylindrischen Durchmesser auf.

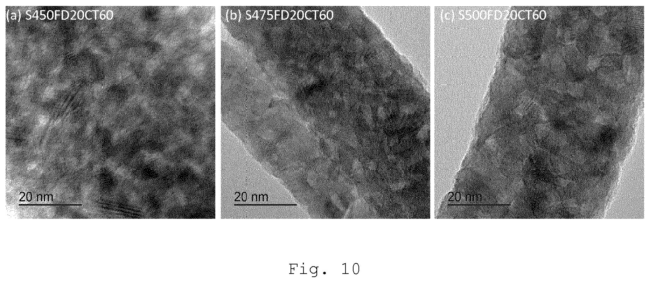

Figur 10 zeigt TEM-Aufnahmen von Nanofasern bei unterschiedlichen Kalzinierungstemperaturen. Mit zunehmender Temperatur nimmt der Kristallinität der Nanofasern zu.

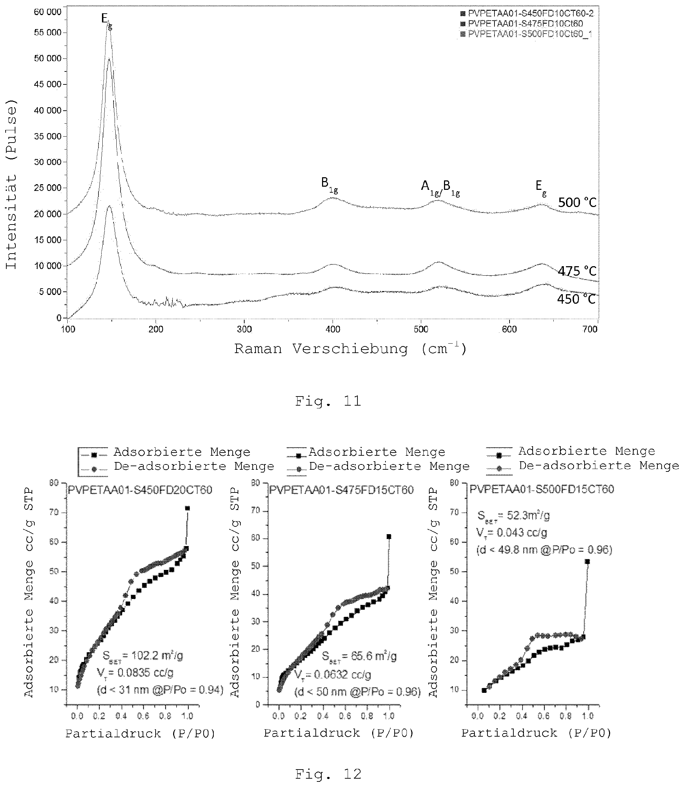

Figur 10 zeigt TEM Aufnahmen von Nanofasern nach Kalzinierung bei unterschiedlichen Temperaturen. Mit zunehmender Kalzinierungstemperatur nimmt der Anteil an kristallinem Titandioxid stark zu oder die Größe der kristallinen Struktur. Dies ist auch aus den RAMAN-Spektren in Figur 11 ersichtlich. Die geringere Amplitude und die Breite der Peaks deuten auf einer geringere Kristallinität oder Nanokristalle hin. Die Peaks bei 450 °C sind deutlich geringer als bei 475 °C oder 500 °C. Außerdem hat die Probe bei 450 °C eine unübliche Hintergrundfluoreszenz und sehr undefinierte Peaks für O-Ti-O B_{1g} und O-Ti-O A_{1g}/B_{1g}. Dies deutet darauf hin, dass bei diesen Nanofasern Anatas-Titandioxid in einem erweiterten Netzwerk von Ti-O-Ti vorliegt. Bei den bei 450 °C kalzinierten Nanofasern liegt daher ein Komposit aus amorphem Titandioxid und kristallinem Titandioxid vor. Gerade amorphes Titandioxid zeichnet sich durch eine deutlich höhere Porosität aus.

Die hohe Porosität zeigt sich auch in der Fähigkeit zur Gassorption (Figur 12). Für Nanofasern, welche bei 450 °C kalziniert wurden, wurde eine spezifische Oberfläche (SSA) von 102 m²/g gemessen (Figur 12 links), während die Nanofasern, welche bei 475 °C, bzw. 500 °C, kalziniert wurden eine Oberfläche von 66 m²/g (Figur 12 Mitte), bzw. 52 m²/g (Figur 12 rechts) aufwiesen.

Für die folgenden Experimente der Silberabscheidung wurde der vorstehend beschriebene AgNO₃/Tris-Komplex verwendet. Nach der Reduktion wurden die Proben gewaschen und für 2 Stunden getrocknet. Danach wurde die Transmission vor und nach der Metallisierung gemessen. Die Ergebnisse zeigt Tabelle 2. Die Metallisierung reduziert die Transmission um 1-4 %, für die meisten Proben allerdings nur im Bereich von 1 %.

Für alle Proben, welche bei 450 °C kalziniert wurden, konnte eine Leitfähigkeit gemessen werden. Dazu wurde an zwei Enden des Glases Silberpaste zur Kontaktierung aufgebracht und die Leitfähigkeit gemessen. Der Abstand der Kontaktpunkte war 5 mm. Der Widerstand war anisotrop wegen der Faserform der Proben. Die Ergebnisse zeigt Tabelle 3. Der Widerstand hing außerdem davon ab, wie viele Nanofasern die Kontakte verbinden.

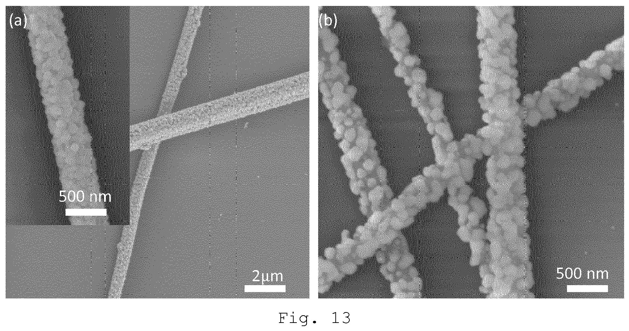

Figur 13 zeigt zwei unterschiedliche metallisierte Proben. Figur 13a zeigt eine metallisierte Nanofaser (450 °C, FD 20 cm, CT 60 Min.) einer Probe, welche Leitfähigkeit zeigte. Figur 13b zeigt eine metallisierte Nanofaser (475 °C, FD 20 cm, CT 60 Min.), einer Probe, welche keine Leitfähigkeit zeigte. Es ist zu erkennen, dass die Silberabscheidung in Figur 13a eine Hülle um die Nanofaser bildet, welche zur Leitfähigkeit führt. In Figur 13b haben sich bei gleichen Bedingungen nur einzelne größere Partikel von Silber gebildet, welche aber nicht zu einer Leitfähigkeit führen. Es wird angenommen, dass das bei der Nanofaser in Figur 13a vorliegende Komposit aus amorphem Titandioxid und Anatas zu der Bildung der Hülle aus metallischem Silber führt.

Auch Proben, welche nur bei 400 °C kalziniert wurden, zeigten keine Leitfähigkeit.

**Tabelle 1**

| | | Batch 1 | | | Batch 2 | | | Batch 3 | | |
|---|---|---|---|---|---|---|---|---|---|---|
| | Temp (°C) | T (%) | σ | n | T (%) | σ | n | T (%) | σ | n |
| FD10CT30 | 450 | 92.00 | 0.08 | 5.00 | 92.20 | 0.05 | 5.00 | 91.70 | 0.00 | 5.00 |
| FD20CT30 | | 92.70 | 0.05 | 5.00 | 92.50 | 0.00 | 5.00 | 92.20 | 0.00 | 5.00 |
| FD10CT60 | | 92.70 | 0.04 | 5.00 | 92.60 | 0.00 | 5.00 | 93.00 | 0.00 | 5.00 |
| FD20CT60 | | 92.80 | 0.00 | 5.00 | 92.70 | 0.22 | 5.00 | 92.70 | 0.00 | 5.00 |
| FD10CT30 | 475 | 90.50 | 0.00 | 5.00 | 91.50 | 0.13 | 5.00 | 91.40 | 0.00 | 5.00 |
| FD20CT30 | | 92.10 | 0.04 | 5.00 | 92.90 | 0.00 | 5.00 | 92.30 | 0.04 | 5.00 |
| FD10CT60 | | 92.40 | 0.00 | 5.00 | 91.80 | 0.05 | 5.00 | 90.50 | 0.05 | 5.00 |
| FD20CT60 | | 92.50 | 0.00 | 5.00 | 91.10 | 0.05 | 5.00 | 91.80 | 0.04 | 5.00 |
| FD10CT30 | 500 | 91.50 | 0.05 | 5.00 | 91.60 | 0.04 | 5.00 | 91.70 | 0.18 | 5.00 |
| FD20CT30 | | 91.30 | 0.13 | 5.00 | 92.20 | 0.00 | 5.00 | 91.70 | 0.04 | 5.00 |
| FD10CT60 | | 91.50 | 0.04 | 5.00 | 92.40 | 0.13 | 5.00 | 91.20 | 0.04 | 5.00 |
| FD20CT60 | | 92.00 | 0.01 | 5.00 | 92.20 | 0.13 | 5.00 | 92.10 | 0.00 | 5.00 |
| Blank | | 92.8 | 0 | 5 | | | | | | |

**Tabelle 2**

| Nach Metallisierung | | Probe 1 | | | Probe 2 | | | Probe 3 | | |
|---|---|---|---|---|---|---|---|---|---|---|
| Probe | Temp (°C) | T (%) | σ | n | T (%) | σ | n | T (%) | σ | n |
| FD10CT30 | 450 | NA | NA | NA | NA | NA | NA | NA | NA | NA |
| FD20CT30 | | 91.10 | 0.00 | 5.00 | 91.70 | 0.04 | 5.00 | 88.70 | 0.00 | 5.00 |
| FD10CT60 | | 92.10 | 0.00 | 5.00 | 90.30 | 0.04 | 5.00 | 89.00 | 0.00 | 5.00 |
| FD20CT60 | | 91.40 | 0.05 | 5.00 | 89.10 | 0.07 | 5.00 | 91.70 | 0.00 | 5.00 |
| FD10CT30 | 475 | 79.10 | 0.25 | 5.00 | 85.50 | 0.12 | 5.00 | 81.00 | 0.26 | 5.00 |
| FD20CT30 | | 90.90 | 0.09 | 5.00 | 91.80 | 0.00 | 5.00 | 90.20 | 0.05 | 5.00 |
| FD10CT60 | | 88.60 | 0.08 | 5.00 | 88.90 | 0.04 | 5.00 | 83.90 | 0.00 | 5.00 |
| FD20CT60 | | 88.20 | 0.21 | 5.00 | 84.80 | 0.14 | 5.00 | 80.30 | 0.05 | 5.00 |
| FD10CT30 | 500 | 85.40 | 0.00 | 5.00 | 86.10 | 0.00 | 5.00 | 87.30 | 0.09 | 5.00 |
| FD20CT30 | | 89.80 | 0.00 | 5.00 | 89.00 | 0.00 | 5.00 | 89.90 | 0.04 | 5.00 |
| FD10CT60 | | 88.40 | 0.00 | 5.00 | 90.60 | 0.04 | 5.00 | 82.00 | 0.13 | 5.00 |
| FD20CT60 | | 90.90 | 0.04 | 5.00 | 90.40 | 0.07 | 5.00 | 89.70 | 0.00 | 5.00 |

**Tabelle 3**

| **Probe** | **R (Ω)** | **d (mm)** |
|---|---|---|
| S450FD20CT30-003 | 4M | 5 |
| | 4M | 5 |
| | 2M | 5 |
| S450FD10CT60-001 | 250 | 5 |
| | 11K | 5 |
| S450FD20CT60-001 | 1M | 5 |
| S450FD20CT60-003 | 13K | 5 |
| | 50K | 5 |
| | 62K | 5 |
| | 8M | 5 |

## Patentansprüche

1. Verfahren zur Herstellung von metallischen Strukturen umfassend folgende Schritte:
a) Bereitstellen einer Spinnzusammensetzung umfassend mindestens eine hydrolysierbare Titanverbindung oder ein Kondensat davon, und mindestens ein organisches Polymer und/oder Oligomer;
b) Elektrospinnen der Zusammensetzung auf ein Substrat
c) Temperaturbehandlung der erhaltenen Nanofasern bei über 430 °C und unter 470 °C, um photokatalytisch aktive Nanofasern umfassend Anatas und amorphes Titandioxid zu erhalten;
d) Kontaktierung mindestens einer Vorläuferverbindung für eine metallische Struktur mit den Nanofasern;
e) Reduktion der mindestens einen Vorläuferverbindung zur metallischen Struktur durch Einwirkung von elektromagnetischer Strahlung auf die Nanofasern.

2. Verfahren nach Anspruch 1, **dadurch gekennzeichnet, dass** die Nanofasern eine spezifische Oberfläche von mindestens 80 m²/g aufweisen.

3. Verfahren nach einem der vorhergehenden Ansprüche, **dadurch gekennzeichnet, dass**
die Vorläuferverbindung ein Silber-, Gold oder Kupferkomplex ist.

4. Verfahren nach einem der vorgehenden Ansprüche, **dadurch gekennzeichnet, dass**
die Nanofasern eine durchschnittliche Länge von über 10 µm aufweisen.

5. Verfahren nach einem der vorhergehenden Ansprüche, **dadurch gekennzeichnet, dass**
die Vorläuferverbindung ein Silber-, Gold oder Kupferkomplex ist und die elektromagnetische Strahlung einer Wellenlänge von < 500 nm aufweist.

6. Verfahren nach einem der vorhergehenden Ansprüche, **dadurch gekennzeichnet, dass**
die Temperatur der Temperaturbehandlung bei 440 °C bis 460 °C liegt.

7. Beschichtetes Substrat erhalten durch das Verfahren nach einem der Ansprüche 1 bis 6, wobei die Beschichtung elektrisch leitfähig ist.

8. Beschichtetes Substrat nach Anspruch 7, **dadurch gekennzeichnet, dass**
das beschichtete Substrat einen Bedeckungsgrad der Nanofasern nach dem Elektrospinnen in den beschichteten Bereichen auf der Oberfläche des Substrats bei unter 20 % der beschichteten Oberfläche des Substrats liegt.

9. Verwendung eines Substrats nach einem der Ansprüche 7 bis 8 als Leiterbahn in elektronischen Anwendungen, in TouchScreen-Displays, in Solarkollektoren, in Displays, als RFID-Antenne oder in Transistoren.

## Claims

1. A process for producing metallic structures, comprising the following steps:
a) providing a spinning composition comprising at least one hydrolyzable titanium compound or a condensate thereof, and at least one organic polymer and/or oligomer;
b) electrospinning the composition on a substrate;
c) thermal treatment of the nanofibers obtained at above 430°C and below 470°C, to obtain photocatalytically active nanofibers comprising anatase and amorphous titanium dioxide;
d) contacting at least one precursor compound for a metallic structure with the nanofibers;
e) reducing the at least one precursor compound to the metallic structure by action of electromagnetic radiation on the nanofiber.

2. The process as claimed in claim 1, **characterized in that** the nanofibers have a specific surface area of at least 80 m²/g.

3. The process as claimed in any of the preceding claims, **characterized in that**
the precursor compound is a silver, gold or copper complex.

4. The process as claimed in any of the preceding claims, **characterized in that**
the nanofibers have an average length of more than 10 µm.

5. The process as claimed in any of the preceding claims, **characterized in that**
The precursor compound is a silver, gold or copper complex and the electromagnetic radiation is wavelength of < 500 nm.

6. The process as claimed in any of the preceding claims, **characterized in that**
the temperature of the thermal treatment is from 440 °C to 460 °C.

7. A coated substrate obtained by the process as claimed in any of claims 1 to 6, wherein the coating is electrically conducting.

8. The coated substrate as claimed in claims 7, **characterized in that**
the degree of coverage of the nanofibers on the coated substrate after the electrospinning in the coated regions on the surface of the substrate is below 20% of the coated surface area of the substrate.

9. The use of a substrate as claimed in any of claims 7 to 8 as conductor track in electronic applications, in touchscreen displays, in solar collectors, in displays, as an RFID antenna or in transistors.

## Revendications

1. Procédé de production de structures métalliques, le procédé comprenant les étapes suivantes :
a) fournir une composition de filage comprenant au moins un composé de titane hydrolysable ou un condensat de celui-ci, et au moins un polymère et/ou oligomère organique ;
b) électrofilage de la composition sur un substrat,
c) traitement thermique des nano-fibres obtenues au-dessus de 430 °C et au-dessous de 470 °C pour obtenir des nano-fibres actives d'un point de vue photocatalytique et comprenant de l'anatase et du dioxyde de titane amorphe ;
d) mettre au moins un composé précurseur d'une structure métallique en contact avec les nano-fibres ;
e) réduire l'au moins un composé précurseur de la structure métallique par action d'un rayonnement électromagnétique sur les nano-fibres.

2. Procédé selon la revendication 1, **caractérisé en ce que**
les nano-fibres ont une superficie spécifique d'au moins 80 m²/g.

3. Procédé selon l'une des revendications précédentes, **caractérisé en ce que**
le composé précurseur est un complexe d'argent, d'or ou de cuivre.

4. Procédé selon l'une des revendications précédentes, **caractérisé en ce que**
les nano-fibres ont une longueur moyenne supérieure à 10 µm.

5. Procédé selon l'une des revendications précédentes, **caractérisé en ce que**
le composé précurseur est un complexe d'argent, d'or ou de cuivre et le rayonnement électromagnétique a une longueur d'onde < 500 nm.

6. Procédé selon l'une des revendications précédentes, **caractérisé en ce que**
la température du traitement thermique est de 440 °C à 460 °C.

7. Substrat revêtu obtenu par le procédé selon l'une des revendications 1 à 6, le revêtement est électriquement conducteur.

8. Substrat revêtu selon la revendication 7, **caractérisé en ce que**
le substrat revêtu a un degré de recouvrement des nano-fibres de moins de 20 % de la surface revêtue du substrat après électrofilage dans les zones revêtues sur la surface du substrat.

9. Utilisation d'un substrat selon l'une des revendications 7 à 8 comme piste conductrice dans des applications électroniques, dans des écrans tactiles, dans des capteurs solaires, dans des afficheurs, comme antenne RFID ou dans des transistors.
